# EUROPÄISCHE PATENTSCHRIFT

(11) **EP 3 110 249 B1**
(45) Veröffentlichungstag und Bekanntmachung des Hinweises auf die Patenterteilung: **18.04.2018**
(21) Anmeldenummer: 15707327.1
(22) Anmeldetag: 25.02.2015
(51) Int. Cl.: A01N 25/28, A01N 47/12, C09D 5/14

(54) **VERFAHREN ZUR HERSTELLUNG BIOZIDER MIKROKAPSELN**
PROCESS FOR PREPARATION OF BIOCIDAL MICROCAPSULES
PROCÉDÉ POUR LA PREPARATION DES MICRO-CAPSULES BIOCIDES

(30) Priorität: 27.02.2014 EP 14157006
(43) Veröffentlichungstag der Anmeldung: 04.01.2017
(73) Patentinhaber: LANXESS Deutschland GmbH, 50569 Köln (DE)
(72) Erfinder: UHR, Hermann, 51373 Leverkusen (DE); MÖWS, Katrin, 44137 Dortmund (DE); LAMORATTA, Monika, 40764 Langenfeld (DE)
(86) Internationale Anmeldenummer: PCT/EP2015/053942
(87) Internationale Veröffentlichungsnummer: WO 2015/128382

(56) Entgegenhaltungen:
- WO-A1-2004/000953
- DE-A1-102006 061 890
- US-A1- 2013 197 127
- WAN ASMA IBRAHIM ET AL: "Performance of Microencapsulated Fungicide in Exterior Latex Paint on Wood Substrate", PERTANIKA, UNIVERSITI PERTANIAN MALAYSIA, SERDANG, MY, Bd. 12, 1. Januar 1989 (1989-01-01), Seiten 409-412, XP009182686, ISSN: 0126-6128

## Beschreibung

Die vorliegende Erfindung betrifft ein Verfahren zur Herstellung Mikrokapseln, enthaltend ein oder mehrere Biozide wie zumindest eine Iodpropargylverbindung sowie zumindest ein Melamin-Formaldehyd-Polymer.

Iodpropargylverbindungen sind bekannte Wirkstoffe, die besonders im Materialschutz dazu eingesetzt werden, technische Materialien wie Klebstoffe, Leime, Papier und Karton, Textilien, Leder, Holz, Holzwerkstoffe, Anstrichmittel und Kunststoffartikel, Kühlschmierstoffe und andere Materialien, die von Mikroorganismen befallen oder zersetzt werden können vor dem Befall, besonders durch Pilze zu schützen. Bekanntester Vertreter der lodpropargylverbindungen ist lodpropargylbutylcarbamat, das nachfolgend auch als IPBC bezeichnet wird.

An zur Ausrüstung von Beschichtungsmassen wie z.B. Holzschutzfarben, Außenfarben oder Putze eingesetzte Fungizide werden hohe Ansprüche gestellt. Die fungizid ausgerüsteten Beschichtungsmassen müssen beispielsweise auch bei häufigem Wasserkontakt stabil bleiben und dürfen keiner unerwünschten Verfärbung unterliegen. Da manche Fungizide wie beispielsweise IPBC eine gewisse Wasserlöslichkeit aufweisen, wird durch Kontakt der Außenfarbe, beispielsweise mit Schlagregen, das Fungizid aus den Farben herausgewaschen. Dieser Vorgang wird auch "Leaching" genannt. Dadurch kommt es zu einer Verringerung der fungitoxischen Wirkung in den Beschichtungsmassen sowie zu einer starken lokalen Belastung der Umwelt mit den Wirkstoffen oder ihren Metaboliten. Dieses Leaching sollte gering sein, damit die Beschichtungsmassen und die Außenwände lange vor Pilzbefall geschützt sind. Eine Möglichkeit zur Verringerung des Leachings ist die Verwendung von Mikroverkapselungen.

Aus dem Stand der Technik sind vor mikrobiologischem Befall geschützte Beschichtungsmassen sowie Verfahren zur Herstellung von mikroverkapselten Biozide bekannt.

So wird beispielsweise in WO 04/000953A1 eine Beschichtungsmasse zum Schutz gegen Mikroorganismenbefall von Oberflächen, die der Einwirkung von Feuchtigkeit oder Wasser ausgesetzt sind, beschrieben, wobei die Beschichtungsmasse entweder selbst einen pH-Wert von mindestens 11,0 aufweist oder für das Beschichten eines Untergrundmaterials vorgesehen ist, dessen pH-Wert mindestens 11,0 beträgt. Die Beschichtungsmasse ist dadurch gekennzeichnet, dass sie ein Biozid, wie z.B. IPBC enthält, das in einem Trägermaterial aus Feststoffteilchen gebunden ist und daraus verzögert freigegeben wird.

DE102006061890 A1 beschreibt Dichtungsmassen, die als Biozid beispielsweise 2-n-Octyl-4-isothiazolin-3-on sowie gegebenenfalls ein oder mehrere andere Biozide enthalten, wobei das Biozid in Mikropartikeln aus zum Beispiel einem Aminoplast-Harz eingeschlossen ist.

Aus DE10133545 A1 ist es bekannt, Dichtungsmassen mit speziellen Benzothiophen-Fungizid-Zubereitungen zu behandeln, um ein Schimmeln der Polymermassen zu verhindern. Es wird dabei auch auf die Schwierigkeit hingewiesen, geeignete Fungizide für Dichtungsmassen zu finden, die stabil sind und keiner Auswaschung unterliegen. Deshalb müssen die eingesetzten Biozide in hohen Konzentrationen verwendet werden, was auch zu einer Umweltbelastung führen kann.

Aus JP2002-053412 A2 ist es bekannt, dass man Biozide in einer Harzmatrix einschließen kann. So wird der Einschluss von 2-n-Octyl-4-isothiazolin-3-on in einem Styrol-Maleinsäureanhydrid-Harz in diesem Dokument beschrieben.

EP 0 758 633 A1 beschreibt poröse Granulate, die chemische Stoffe, wie zum Beispiel auch Biozide enthalten können, die diese in der Anwendung langsam freigeben.

US2013/197127 offenbart die Verwendung von Mikrokapseln, enthaltend IPBC, wobei das IPBC mit einem Kapselmaterial verkapselt ist, dass ein Formaldehyd-Melamin-Harz enthält.

In JP2004099557A2 sind feine Partikel von biozidhaltigen Harzen beschrieben, die zur Unterdrückung des Wachstums von Mikroorganismen insbesondere in wässrigen Emulsionsfarben eingesetzt werden.

Die aus dem Stand der Technik bekannten Mikrokapseln zeigen jedoch noch keine zufriedenstellende antifungische Wirkung bei gleichzeitig geringer Leaching-Rate und hoher Beständigkeit oder Lagerstabilität.

Es bestand daher die Aufgabe der vorliegenden Erfindung ein Verfahren zur Herstellung von Mikrokapseln bereitzustellen, die einen verbesserten Schutz von Beschichtungsmassen vor Pilzbefall ermöglichen. Die Lösung der gestellten Aufgabe und Gegenstand der vorliegenden Erfindung ist nun ein Verfahren zur Herstellung von Mikrokapseln, enthaltend zumindest eine lodpropargylverbindung, wobei die zumindest eine lodpropargylverbindung mit einem Mikroverkaspelungsmaterial mikroverkapselt ist, das zumindest ein Melamin-Formaldehyd Polymer enthält, umfassend zumindest:
a) Aufbringen von Mikroverkapselungsmaterial enthaltend zumindest ein Melamin-Formaldehyd Polymer auf zumindest eine lodpropargylverbindung
b) Behandlung bei einer Temperatur T von 50 bis 95°C, bevorzugt 64 bis 95°C, vorzugsweise 68 bis 95°, besonders bevorzugt 70 bis 95°C und ganz besonders bevorzugt 70 bis 90°C über einen Zeitraum t, so dass das Produkt T x T x t > 18.000, vorzugsweise > 20.000 und besonders bevorzugt > 25.000 (°C)²h beträgt.

Der Rahmen der Erfindung umfasst alle oben stehenden und im Folgenden aufgeführten, allgemeinen oder in Vorzugsbereichen genannten Parameter und Erläuterungen untereinander, also auch zwischen den jeweiligen Bereichen und Vorzugsbereichen in beliebiger Kombination.

Die erfindungsgemäß hergestellten Mikrokapseln enthalten zumindest eine lodpropargylverbindung die ausgewählt ist aus der Gruppe:
3-lod-2-propynyl-propyl-carbamat, 3-Iod-2-propinyl-butyl-carbamat (IPBC), 3-lod-2-propinyl-m-chlorphenyl-carbamat, 3-Iod-2-propinyl-phenyl-carbamat, 3-lod-2-propinyl-2,4,5-trichlorphenylether, 3-lod-2-propinyl-4-chlorphenylformal (IPCF), Di-(3-lod-2-propinyl)-hexyl-dicarbamat, 3-Iod-2-propinyl-oxyethanol-ethylcarbamat, 3-Iod-2-propinyl-oxy-ethanol-phenylcarbamat, 3-Iod-2-propinyl-thioxo-thioethylcarbamat, 3-lod-2-propinyl-carbaminsäureester (IPC), N-Iodpropargyloxycarbonyl-alanin, N-Iodpropargyloxycarbonyl-alanin-ethylester, 3-(3-Iodpropargyl)-benzoxazol-2-on, 3-(3-Iodpropargyl)-6-chlorbenzo-xazol-2-on, 3-Iod-2-propinyl-alkohol, 4-Chlorphenyl-3-iodpropargylformal, 3-Brom-2,3-diiod-2-propenylethylcarbamat, 3-Iod-2-propinyl-n-hexylcarbamat, 3-lod-2-propinyl-cyclohexyl-carbamat
Eine besonders bevorzugte lodpropargylverbindung ist 3-lod-2-propinyl-butyl-carbamat (IPBC).

Die lodpropargylverbindungen selbst sind bekannt und können nach literaturbekannten Methoden hergestellt oder im Handel erworben werden.

Die Mikroverkapselung der lodpropargylverbindungen erfolgt durch ein Mikroverkapselungsmaterial. Mikroverkapselung bedeutet im Rahmen dieser Erfindung die zumindest teilweise, vorzugsweise vollständige Umhüllung der zumindest einen lodpropargylverbindungen mit Mikroverkapselungsmaterial.

Die Mikrokapseln weisen beispielsweise eine volumengemittelte Teilchengröße von 0,3 bis 100 µm auf, bevorzugt von 5 bis 60 µm.

In einer weiteren Ausführungsform weisen die Mikrokapseln beispielsweise einen D90 Wert, bestimmt über Laserbeugung als volumengewichtete Verteilung wie im experimentellen Teil beschrieben, von 90 µm oder weniger auf, vorzugsweise 60 µm oder weniger, besonders bevorzugt 10 bis 60 µm.

Die Mikrokapseln enthalten zumindest ein Melamin-Formaldehyd Polymer als Mikroverkapselungsmaterial. Unter dem Begriff Melamin-Formaldehyd Polymer ist ein Polymer zu verstehen, das ein Polykondensat von zumindest Melamin und Formaldehyd ist. Solche Polykondensate werden typischerweise durch Polykondensation von Melamin mit einem molaren Überschuss an Formaldehyd erhalten.

Generelle Verfahren zur Herstellung von Mikrokapseln, insbesondere auch zur Herstellung von Mikrokapseln aus Melamin-Formaldehyd Polykondensaten sind bekannt (siehe beispielsweise C.A. Finch, R. Bodmeier, Microencapsulation, Ullmann's Encyclopedia of Industrial Chemistry, 6. Auflage 2001, Electronic Release).

Die Mikrokapseln können beispielsweise zumindest ein weiteres Mikroverkapselungsmaterial enthalten, das ausgewählt ist aus der Gruppe der synthetischen, halbsynthetischen oder natürlichen Polymere, wie insbesondere Aminoplast-Harze.

Unter Aminoplast-Harzen versteht man im Allgemeinen Polykondensationsprodukte aus Carbonyl-Verbindungen mit NH-Gruppen enthaltenden Verbindungen. Von besonderem Interesse sind in diesem Zusammenhang mit Harnstoff beziehungsweise Phenol modifizierte Melamin-Formaldehyd-Harze (Melamin-Harnstoff-Formaldehyd-Harze, Melamin-Phenol-Formaldehyd-Harze). Als weitere mögliche Aminoplast-Harze können dem Melamin-Formaldehyd Harz beispielsweise Aminoplast-Harze aus einer NH-Gruppen enthaltenden Verbindung und Acetaldehyd oder Glyoxal zugesetzt werden.

Des Weiteren kann das Mikroverkapselungsmaterial Urethanharze, Cyanamidharze bzw. Dicyanamidharze, Anilinharze, Sulfonamidharze oder Mischungen dieser Harze enthalten. Solche Harze und deren Herstellung sind dem Fachmann bekannt.

Bevorzugte synthetische Polymere sind beispielsweise Acrylpolymere und -copolymere, Polyacrylamid, Polyalkylcyanoacrylat, und Poly-(ethylenvinylacetat), Aluminiummonostearat, Carboxyvinyl-polymere, Polyamide, Poly-(methylvinylether-maleinsäureanhydrid), Poly-(adipyl-L-lysin), Polycarbonate, Polyterephthalamid, Poly-(vinylacetatphthalat), Poly-(terephthaloyl- L-lysin), Polyarylsulfone, Poly-(methylmethacrylat), Poly-(ε-caprolacton), Polyvinylpyrrolidon, Polydimethylsiloxan, Polyoxyethylene, Polyester, Polyglykolsäure, Polymilchsäure und deren Copolymere, Polyglutaminsäure, Polylysin, Polystyrol, Poly-(styrol-acrylnitril), Polyimide und Polyvinylalkohol.

Bevorzugte halbsynthetische Polymere sind beispielsweise Celluloseacetat, Celluloseacetatbutyrat, Celluloseacetatphthalat, Cellulosenitrat, Ethylcellulose, Hydroxypropylcellulose, Natriumcarboxymethylcellulose, Hydroxypropylmethylcellulose, Methylcellulose, Hydroxypropylmethylcellulosephthalat, hydrierter Talg, Myristylalcohol, Glycerinmono- oder -dipalmitat, hydriertes Ricinusöl, Glycerylmono- oder -tristearate und 12-Hydroxystearylalkohol.

Bevorzugte natürliche Polymere sind beispielsweise Gummi Arabicum, Agar, Agarose, Maltodextrin, Natriumalginat, Calciumalginat, Dextran, Fette, Fettsäuren, Cetylalkohol, Milchfeststoffe, Molassen, Gelatine, Gluten, Albumin, Schellack, Stärken, Caseinate, Stearine, Saccharose sowie Wachse, wie Bienenwachs, Carnaubawachs und Spermacetiwachs.

Im Allgemeinen kann das Mikroverkapselungsmaterial neben zumindest einem Melamin-Formaldehyd Polymer bezogen auf sein Gesamtgewicht bis zu 50 Gew.-% anderer synthetischer, halbsynthetischer oder natürlicher Polymere, wie insbesondere Aminoplast-Harze enthalten.

Bevorzugt enthält das Mikroverkapselungsmaterial mindestens 95 Gew.-% an zumindest einem Melamin-Formaldehyd Polymer, besonders bevorzugt mindestens 99 Gew.-% an zumindest einem Melamin-Formaldehyd Polymer.

Im Allgemeinen beträgt das Gewichtsverhältnis (w/w) des Mikroverkapselungsmaterials zu der zumindest einen lodpropargylverbindung in den Mikrokapseln von 1:10 bis 100:1, bevorzugt von 1:10 bis 10:1 und ganz besonders bevorzugt von 1:4 bis 2:1.

Gemäß a) wird das zumindest eine Melamin-Formaldehyd Polymer auf die zumindest eine lodpropargylverbindung aufgebracht.

Dafür geeignete Melamin-Formaldehyd Polymere sind hinlänglich bekannt und beispielsweise unter den Handelsnamen Saduren® (BASF AG), Maprenal® (Ineos Melamines), Quecodur® (Thor GmbH) kommerziell erhältlich oder aus Melamin und Formaldehyd nach an sich bekannten Methoden, wie beispielsweise in WO 2008/000797 A2 beschrieben, herstellbar.

Die Aufbringung in a) wird vorzugsweise so durchgeführt, dass eine wässrige Emulsion oder Suspension der zumindest einen lodpropargylverbindung mit zumindest einem Melamin-Formaldehyd Polymer, vorzugsweise gelöst in einem wässrigen Medium, in Kontakt gebracht wird und die Aufbringung des zumindest einen Melamin-Formaldehyd Polymers auf die zumindest eine lodpropargylverbindung durch Verminderung der Löslichkeit des zumindest einen Melamin-Formaldehyd Polymers herbeigeführt wird.

Die Verminderung der Löslichkeit kann dabei entweder über die Erhöhung des Elektrolytgehaltes wie z.B. durch Zugabe von Salz oder einer wässrigen Salzlösung erfolgen oder durch Einstellung des pH-Wertes.

Geeignete Bedingungen für die Aufbringung des Polymers auf die lodpropargylverbindungen können in wenigen Vorversuchen ohne großen Aufwand experimentell bestimmt werden. Beispielsweise kann die Aufbringung bei einem pH-Wert im Bereich von 0 bis 6,5, bevorzugt von 1,0 bis 4,0, besonders bevorzugt von 2,50 bis 3,50 und ganz besonders bevorzugt von 2,80 bis 3,20 gemessen bzw. bezogen auf Standardbedingungen erfolgen.

Im erfindungsgemäßen Verfahren zur Herstellung der Mikrokapseln kann die Aufbringung der Melamin-Formaldehyd Polymere in einem breiten Temperaturbereich erfolgen, beispielsweise findet die Aufbringung bei einer Temperatur von 10 bis 95°C, bevorzugt von 50 bis 95°C, besonders bevorzugt in einem Bereich von 64 bis 95°C, ganz besonders bevorzugt bei einer Temperatur von 68 bis 95°C, noch weiter bevorzugt bei einer Temperatur von 70 bis 95°C und ganz besonders bevorzugt bei 70 bis 95°C statt. Insbesondere bei Einsatz von IPBC sind Temperaturen von 68 bis 95°C, bevorzugt 70 bis 95°C und besonders bevorzugt 70 bis 90°C vorteilhaft, da sie am oberen Ende des Schmelzpunktbereiches von IPBC oder darüber liegen (64 - 68°C).

Das Inkontaktbringen und Aufbringen kann beispielsweise so erfolgen, dass eine wässrige Emulsion oder Suspension der zumindest einen lodpropargylverbindung vorgelegt wird und eine wässrige Lösung von zumindest einem Melamin-Formaldehyd Polymer zugegeben wird, bevor dann die Verminderung der Löslichkeit des zumindest einen Melamin-Formaldehyd Polymers erfolgt, vorzugsweise durch Einstellung des pH-Wertes.

In diesem Fall erfolgt die Zugabe des Elektrolytes oder die Einstellung des pH-Wertes beispielsweise unmittelbar oder über einen Zeitraum von mindestens einer Minute, bevorzugt über einen Zeitraum von mindestens 30 Minuten bis 24 Stunden, besonders bevorzugt über einen Zeitraum von mindestens einer Stunde und ganz besonders bevorzugt über einen Zeitraum von mindestens 2 bis 6 Stunden.

Alternativ dazu kann das Inkontaktbringen und Aufbringen kann beispielsweise so erfolgen, dass eine wässrige Emulsion oder Suspension der zumindest einen lodpropargylverbindung bereit gestellt wird, in der Bedingungen eingestellt sind, die das Aufbringen von zumindest einem Melamin-Formaldehyd Polymer bewirken, vorzugsweise durch Einstellung des pH-Wertes und dann eine wässrige Lösung von zumindest einem Melamin-Formaldehyd Polymer zugegeben wird.

Zur Einstellung des pH Wertes können sowohl anorganische als auch organische Säuren wie beispielsweise Salzsäure, Schwefelsäure, Phosphorsäure oder Zitronensäure, Oxalsäure, Essigsäure, Ameisensäure, saure Salze oder beliebige Mischungen der vorgenannten Verbindungen, verwendet werden.

Iodpropargylverbindungen sind typischerweise nur schlecht wasserlöslich.

In a) werden daher vorzugsweise wässrige Emulsionen oder Suspensionen von lodpropargylverbindungen, bzw. Lösungen von lodpropargylverbindungen in einem organischen Lösungsmittel eingesetzt. Dem Fachmann ist dabei klar, dass zur Herstellung von Emulsionen von lodpropargylverbindungen in einem organischen Lösungsmittel, solche organischen Lösungsmittel eingesetzt werden müssen, die mit Wasser nicht oder zumindest nicht vollständig mischbar sind.

In einer besonders bevorzugten Ausführungsform wird in Schritt a) eine wässrige Suspension zumindest einer lodpropargylverbindung eingesetzt.

In einer alternativen Ausführungsform wird eine wässrige, emulgierte Schmelze von zumindest einer lodpropargylverbindung eingesetzt.

In a) können der wässrige Emulsion oder Suspension auch weitere dem Fachmann bekannte Hilfsstoffe, wie beispielsweise, Schutzkolloide beigefügt werden.

Geeignete Schutzkolloide sind beispielsweise Polyacrylate, bevorzugt Coadis® BR3 (Firma Coatex), teilverseiftes Polyvinylacetat, Polyvinylalkohol, Polyvinylpyrolidon, Zelluloseether (Tylose), wie beispielsweise Methylzellulose, Hydroxyethylzellulose oder Hydroxypropylmethylzellulose, Stärke, Proteine, Gummi Arabicum, Alginate, Pektine, Gelatine oder Mischungen aus diesen Verbindungen eingesetzt. Besonders bevorzugt wird als Schutzkolloid eine Mischung aus Gummi Arabicum und Polyacrylat eingesetzt.

Das Schutzkolloid wird typischerweise zumindest teilweise Bestandteil des Mikroverkapselungsmaterials wie oben beschrieben.

Im erfindungsgemäßen Verfahren zur Herstellung der erfindungsgemäßen Mikrokapseln erfolgt gemäß b) eine Behandlung Temperatur T von 50 bis 95°C, bevorzugt 64 bis 95°C, vorzugsweise 68 bis 95°, besonders bevorzugt 70 bis 95°C und ganz besonders bevorzugt 70 bis 90°C über einen Zeitraum t, so dass das Produkt T x T x t > 18.000, vorzugsweise > 20.000, wie beispielsweise > 20.000 bis 300.000 und besonders bevorzugt > 25.000, wie beispielsweise > 25.000 bis 300.000 (°C)²h beträgt. Unter Behandlung bei einer bestimmten Temperatur ist die Behandlung von Mikrokapseln zu verstehen, sobald sie gemäß a) entstehen, d.h. ab Beginn der Aufbringung von Mikroverkapselungsmaterial. Das Merkmal gemäß b) ist demzufolge bereits erfüllt, wenn die Aufbringungstemperatur im oben genannten Temperaturintervall liegt.

Die Behandlung gemäß b) kann alternativ oder zusätzlich nach beendeter Aufbringung auch durch dem Aussetzen der Mikrokapseln bei einer Temperatur erfolgen, die in den angegebenen Intervallen liegt. Dieses Aussetzen kann beispielsweise und bevorzugt durch Nachrühren, Stehenlassen oder Lagern der Reaktionsmischungen erfolgen oder nach Isolation der Mikrokapseln beispielsweise durch Lagern erfolgen.

Ohne sich in irgendeiner Form wissenschaftlich festlegen zu wollen, wird vermutet, dass durch die Behandlung bei vorgenannten Temperaturen noch nicht vernetzte oder noch nicht polymerisierte oder kondensierte Gruppen vernetzt oder polymerisiert werden.

Die Behandlung bei oben genannten Temperaturen erfolgt vorzugsweise über einen Zeitraum von einer Stunde oder mehr, bevorzugt über einen Zeitraum von 1 bis 30 Stunden, besonders bevorzugt über einen Zeitraum von 5 bis 30 Stunden statt.

Längere Zeitdauern bringen keine nennenswerten Verbesserungen mehr.

In einer bevorzugten Ausführungsform bezieht sich die Behandlung und das obige Produkt auf den Zeitraum und die Temperatur nach Beendigung der Aufbringung.

In einer alternativen Ausführungsform ist es möglich zur Herstellung der Mikrokapseln Harnstoff einer Suspension oder Emulsion der lodpropargylverbindungen zuzugeben. Die Harnstoffzugabe kann beispielsweise vor der Behandlung gemäß b) erfolgen. In einer alternativen Ausführungsform kann die Zugabe des Harnstoffs auch unmittelbar nach der Behandlung gemäß b) erfolgen. In einer weiteren alternativen Ausführungsform kann die Zugabe des Harnstoffs im Rahmen einer Formulierung mit weiteren Hilfsstoffen wie beispielsweise Gebindekonservierungsstoffen und Emulgatoren nach der thermischen Behandlung erfolgen. Bevorzugt erfolgt die Zugabe des Harnstoffs nach der thermischen Behandlung im Rahmen einer Formulierung mit weiteren Hilfsstoffen.

Die Zugabe des Harnstoffes kann auch bei der Herstellung der Formulierung aus den isolierten Mikrokapseln erfolgen.

Die zugegebene Harnstoffmenge beträgt beispielsweise von 0,1 bis 20 Gew.-%, bevorzugt 1 bis 10 Gew.-%, besonders bevorzugt 2 bis 5 Gew.-% bezogen auf die Gesamtmenge an eingesetztem Verkapselungsmaterial.

Das erfindungsgemäße Verfahren zur Herstellung der erfindungsgemäßen Mikrokapseln kann bei beliebigen Drücken durchgeführt werden. Bevorzugt wird das erfindungsgemäße Verfahren zur Herstellung der erfindungsgemäßen Mikrokapseln bei Umgebungsdruck durchgeführt.

Die Mikrokapseln lassen sich anschließend beispielsweise durch Filtration, Sedimentation oder Zentrifugation isolieren und ggf. bei Raumtemperatur oder durch leichtes Erwärmen trocknen. Es besteht aber auch die Möglichkeit das Mikroverkapselungsmaterial durch Sprühtrocknung oder Gefriertrocknung zu trocknen und zu isolieren. Bevorzugt werden die erfindungsgemäßen Mikrokapseln durch Filtration abgetrennt und ohne weitere Trocknung für die Herstellung von Formulierungen eingesetzt.

Die erfindungsgemäß hergestellten Mikrokapseln weisen überraschenderweise eine gegenüber anderen Mikroverkapselungsverfahren verringerte Leaching-Rate auf, und sind daher besonders vorteilhaft.

Daher umfasst die Erfindung weiterhin Mikrokapseln, die nach dem erfindungsgemäßen Verfahren erhältlich sind bzw. Mikrokapseln, enthaltend zumindest eine lodpropargylverbindung, wobei die zumindest eine lodpropargylverbindung mit zumindest einem Melamin-Formaldehyd Polymer mikroverkapselt ist und wobei die Mikrokapseln eine 24h-Leachingrate von 1 bis 80 ppm (ppm soweit nicht anders angegeben bezieht sich immer auf Gewichts-ppm), bevorzugt von 2 bis 50 ppm, besonders bevorzugt von 5 bis 40 ppm und ganz besonders bevorzugt 5 bis 30 ppm, bestimmt mittels 24h-Leaching-Test, wie in den Beispielen angegeben, aufweisen.

Die Mikrokapseln eignen sich insbesondere für den Einsatz in oder als Biozide, insbesondere fungizide Mittel. Daher sind von der Erfindung auch biozide Mittel enthaltend Mikrokapseln umfasst, sowie die Verwendung der Mikrokapseln als biozides Mittel oder in bioziden Mitteln.

Die Mikrokapseln zeichnen sich durch hohe Wirksamkeit und ihr breites Wirkungsspektrum gegen Schimmelpilze aus.

Es seien beispielsweise Mikroorganismen der folgenden Gattung genannt:
Alternaria, wie Alternaria tenuis,
Aspergillus, wie Aspergillus niger,
Chaetomium, wie Chaetomium globosum,
Coniophora, wie Coniophora puetana,
Lentinus, wie Lentinus tigrinus,
Penicillium, wie Penicillium glaucum,
Polyporus, wie Polyporus versicolor,
Aureobasidium, wie Aureobasidium pullulans,
Sclerophoma, wie Sclerophoma pityophila,
Trichoderma, wie Trichoderma viride.

Die bioziden Mittel können in beliebiger Formulierung vorliegen wie beispielsweise in Form von Suspensionskonzentraten, wasserdispergierbaren Pulvern, wasserdispergierbaren Granulaten oder einfachen Pulvermischungen, wobei Suspensionskonzentrate, Pulvermischungen und wasserdispergierbare Granulate bevorzugt sind.

Grundsätzlich sind bevorzugte Formulierungsarten im Wesentlichen abhängig vom Einsatzzweck und den dafür geforderten physikalischen Eigenschaften. Da diese jedoch bekannt sind, ist es für den Fachmann gängige Praxis, in wenigen Versuchen eine bevorzugte Formulierungsart zu ermitteln.

Die Formulierungen können zusätzlich auch noch weitere Stoffe, wie Stabilisatoren, Gebindekonservierungsmittel und weitere Biozide, wie beispielsweise Fungizide, Algizide, Insektizide, Akarizide, Nematizide, Radizide und Herbizide oder Mischungen davon, bevorzugt Fungizide oder Algizide oder Mischungen davon, ganz bevorzugt Algizide enthalten, jeweils unabhängig voneinander entweder in mikroverkapselter Form oder nicht mikroverkapselter Form.

Die bioziden Mittel können neben den erfindungsgemäßen Mikrokapseln gegebenenfalls weiterhin verschiedene Hilfsstoffe enthalten. Für die nachstehend genannten Hilfsstoffe besteht jeweils unabhängig voneinander auch die Möglichkeit, dass sie nicht enthalten sind. Mögliche Hilfsstoffe sind beispielsweise:
- Grenzflächenaktive Stoffe, wie beispielsweise Tenside. Tenside können beispielsweise nichtionische, kationische und amphotere Tenside, vorzugsweise anionische Tenside sein. Anionische Tenside sind beispielsweise Alkylsulfate, Alkylethersulfate, Alkylarylsulfonate, Alkylsuccinate, Alkylsulfosuccinate, N-Alkoylsarkosinate, Acyltaurate, Acylisethionate, Alkylphosphate, Alkyletherphosphate, Alkylethercarboxylate, Alpha-Olefinsulfonate, insbesondere die Alkali- und Erdalkalimetallsalze, zum Beispiel Natrium-, Kalium-, Magnesium-, Calcium-, sowie Ammonium- und Triethanolamin-Salze. Die Alkylethersulfate, Alkyletherphosphate und Alkylethercarboxylate können jeweils beispielsweise von 1 bis 10 Ethylenoxid- oder Propylenoxid-Einheiten, bevorzugt 1 bis 3 Ethylenoxideinheiten aufweisen. Geeignet sind zum Beispiel Natriumlaurylsulfat, Ammoniumlaurylsulfat, Natriumlaurylethersulfat, Ammoniumlaurylethersulfat, Natriumlaurylsarkosinat, Natriumoleylsuccinat, Ammoniumlaurylsulfosuccinat, Natriumdodecylbenzolsulfonat, Triethanolamindodecyl-benzolsulfonat. Die erfindungsgemäßen bioziden Mittel können dabei beispielsweise von 0,01 bis 10 Gew.-%, vorzugsweise von 0,2 bis 8 Gew.-%, besonders bevorzugt von 0,3 bis 5 Gew.-% und ganz besonders bevorzugt von 0,5 bis 3 Gew.-% an grenzflächenaktiven Stoffen enthalten.
- Entschäumer. Als Entschäumer werden im Allgemeinen grenzflächenaktive Stoffe eingesetzt, die in der tensidischen Lösung nur schwach löslich sind. Bevorzugte Entschäumer sind solche, die sich von natürlichen Fetten und Ölen, Petroleum-Derivaten oder Siliconölen ableiten.
- Benetzungsmittel, wie beispielsweise Alkali-, Erdalkali-, Ammoniumsalze von aromatischen Sulfonsäuren, zum Beispiel Lignin-, Phenol-, Naphthalin-und Dibutylnaphthalinsulfonsäure, sowie von Fettsäuren, Alkyl-und Alkylarylsulfonaten, Alkyl-, Laurylether-und Fettalkoholsulfaten, sowie Salze sulfatierter Hexa-, Hepta-und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl-oder Nonylphenol, Alkylphenol-oder Tributylphenylpolyglycolether, Tris-sterylphenyletherethoxylate, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose. Die bioziden Mittel können dabei beispielsweise von 0,01 bis 8 Gew.-%, vorzugsweise von 0,2 bis 6 Gew.-%, besonders bevorzugt von 0,3 bis 5 Gew.-% und ganz besonders bevorzugt von 0,5 bis 3 Gew.-% an Benetzungsmitteln enthalten.
- Emulgatoren, wie beispielsweise Natrium-, Kalium-und Ammoniumsalze von gradkettigen aliphatischen Carbonsäuren der Kettenlänge C₁₀-C₂₀, Natriumhydroxyoctadecansulfonat, Natrium-, Kalium-und Ammoniumsalze von Hydroxyfettsäuren der Kettenlänge C₁₀-C₂₀ und deren Sulfierungs- bzw. Acetylierungsprodukte, Alkylsulfate, auch als Triethanolaminsalze, Alkyl-(C₁₀-C₂₀)-sulfonate, Alkyl-(C₁₀-C₂₀)-arylsulfonate, Dimethyldialkyl-(C₈-C₁₈)-ammoniumchlorid, Acyl-, Alkyl-, Oleyl-und Alkylaryloxethylate und ihre Sulfierungsprodukte, Alkalisalze der Sulfobernsteinsäureester mit aliphatischen gesättigten einwertigen Alkoholen der Kettenlänge C₄-C₁₆, Sulfobernsteinsäure-4-Ester mit Polyethylenglykolethern von einwertigen aliphatischen Alkoholen der Kettenlänge C₁₀-C₁₂ (Di-Natriumsalz), Sulfobernsteinsäure-4-Ester mit Polyethylenglykolnonylphenylether (Di-Natriumsalz), Sulfobernsteinsäure bis-cyclohexylester (Natriumsalz), Ligninsulfonsäure sowie deren Calcium-, Magnesium-, Natrium- und Ammoniumsalze, Polyoxyethylen-sorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Vorzugsweise werden als Emulgatoren verwendet: Natriumlaurylsulfat, Natriumlaurylethersulfat, ethoxyliert (3 Ethylenoxidgruppen); die Polyethylenglykol(4-20)ether des Oleylalkohols sowie die Polyethenoxid-(4-14)ether von Nonylphenol. Die bioziden Mittel können dabei beispielsweise von 0,01 bis 15 Gew.-%, vorzugsweise von 0,02 bis 8 Gew.-%, besonders bevorzugt von 0,05 bis 6 Gew.-% und ganz besonders bevorzugt von 0,1 bis 5 Gew.-% an Emulgatoren enthalten.
- Dispergiermittel, wie beispielsweise Alkylphenolpolyglycolether. Die erfindungsgemäßen bioziden Mittel können dabei beispielsweise von 0,01 bis 15 Gew.-%, vorzugsweise von 0,02 bis 8 Gew.-%, besonders bevorzugt von 0,05 bis 6 Gew.-% und ganz besonders bevorzugt von 0,1 bis 5 Gew.-% an Dispergiermitteln enthalten.
- Stabilisatoren, wie beispielsweise Cellulose und Cellulosederivate. Die bioziden Mittel können dabei beispielsweise von 0,01 bis 6 Gew.-%, vorzugsweise von 0,01 bis 3 Gew.-%, besonders bevorzugt von 0,01 bis 2 Gew.-% und ganz besonders bevorzugt von 0,01 bis 1 Gew.-% an Stabilisatoren enthalten.
- Stabilisatoren, wie beispielsweise Antioxidantien, Radikalfänger oder UV-Absorber.
- Haftmittel oder Schutzkolloide, wie beispielsweise Carboxymethylcellulose, natürliche und synthetische pulvrige, körnige oder latexförmige Polymere, wie Gummi Arabicum, Polyvinylalkohol, Polyvinylacetat, sowie natürliche Phospholipide, wie Kephaline und Lecithine und synthetische Phospholipid sowie Paraffinöle. Die erfindungsgemäßen bioziden Mittel können dabei beispielsweise von 0,01 bis 8 Gew.-%, vorzugsweise von 0,05 bis 4 Gew.-%, besonders bevorzugt von 0,2 bis 3 Gew.-% und ganz besonders bevorzugt von 0,2 bis 2 Gew.-% an Haftmitteln enthalten.
- Spreitmittel, wie beispielsweise Isopropylmyristat Polyoxyethylennonylphenylether und Polyoxyethylenlaurylphenylether. Die erfindungsgemäßen bioziden Mittel können dabei beispielsweise von 0,01 bis 20 Gew.-%, vorzugsweise von 0,1 bis 10 Gew.-%, besonders bevorzugt von 0,1 bis 5 Gew.-% und ganz besonders bevorzugt von 0,1 bis 2 Gew.-% an Spreitmitteln enthalten.
- Duftstoffe und Farbstoffe, wie beispielsweise anorganische Pigmente, zum Beispiel Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink. Die erfindungsgemäßen bioziden Mittel können dabei beispielsweise jeweils von 0,001 bis 4 Gew.-%, vorzugsweise von 0,01 bis 1 Gew.-%, besonders bevorzugt von 0,01 bis 0,8 Gew.-% an Duftstoffen und Farbstoffen enthalten.
- Puffersubstanzen, Puffersysteme oder pH-Wert-Regulatoren. Die erfindungsgemäßen bioziden Mittel können dabei beispielsweise jeweils von 0,01 bis 10 Gew.-%, vorzugsweise von 0,1 bis 5 Gew.-% an Puffersubstanzen, Puffersystemen oder pH-Wert-Regulatoren enthalten.
- Verdickungsmittel, wie beispielweise Polysaccharide, Xanthan Gum, Natrium- oder Magnesium Silicate, Heteropolysaccharide, Alginate, Carboxymethylcellulose, Gummi Arabicum oder Polyacrylsäuren, bevorzugt Xanthan Gum.
   - Entstaubungsmittel sind beispielsweise Polyglykole und Polyglykolether. Die erfindungsgemäßen bioziden Mittel können dabei beispielsweise jeweils von 0,01 bis 2 Gew.-%, vorzugsweise von 0,05 bis 1 Gew.-%, besonders bevorzugt von 0,1 bis 0,5 Gew.-% an Entstaubungsmitteln enthalten.
   - Als Fließmittel oder Trennmittel können beispielsweise hochdisperse Kieselsäure oder Mg-Salze von Fettsäuren eingesetzt werden. Die erfindungsgemäßen bioziden Mittel können dabei zur Verbesserung der Fließfähigkeit der Feststoffe jeweils von 0,01 bis 5 Gew.-%, vorzugsweise von 0,05 bis 3 Gew.-%, besonders bevorzugt von 0,1 bis 2 Gew.-% an Fließmittel enthalten.
   - Gebindekonservierungsmittel sind beispielsweise Biozide, Bakterizide und Fungizide. Die erfindungsgemäßen bioziden Mittel können dabei beispielsweise jeweils von 0,01 bis 2 Gew.-%, vorzugsweise von 0,05 bis 1 Gew.-% an Gebindekonservierungsmittel enthalten.

Der Gesamtgehalt der oben genannten Hilfsmittel in den erfindungsgemäßen bioziden Mitteln beträgt beispielsweise von 0,001 bis 20 Gew.-%, bevorzugt von 0,1 bis 15 Gew.-% und besonders bevorzugt von 0,1 bis 10 Gew.-%.

Feste Formulierungen, wie beispielsweise Pulvermischungen oder wasserdispergierbare Granulate (WG) können neben den partikulären mikroverkapselten lodpropargylverbindungen auch noch feste Hilfsmittel wie zum Beispiel natürliche Gesteinsmehle, wie Kaoline, Tonerden, Talkum, Marmor, Kreide, Quarz, Attapulgit, Montmorillonit oder Diatomeenerde oder synthetische anorganische Stoffe, wie hochdisperse Kieselsäure, Aluminiumoxid und Silikate enthalten oder Mischungen davon.

Die festen Formulierungen können sich in an sich bekannter Weise beispielsweise durch innige Vermischung der Mikrokapseln mit den festen Hilfsmitteln oder durch gemeinsame Zerkleinerung von festen Hilfsmitteln mit den mikroverkapselten lodpropargylverbindungen erhalten werden. Weiterhin können die festen Formulierungen durch Trocknung, beispielsweise Sprühtrocknung, einer flüssigen Formulierung erhalten werden.

Bevorzugte feste Formulierungen enthalten beispielsweise von 10 bis 99,999 Gew.-% der Mikrokapseln, vorzugsweise von 15 bis 99,9 Gew.-%.

Flüssige Formulierungen können beispielsweise Suspensionskonzentrate, Dispersionen, Gele oder Pasten sein.

Bevorzugte flüssige Formulierungen sind bevorzugt wässrige Dispersionen.

Die flüssigen Formulierungen wie insbesondere die Dispersionen lassen sich in an sich bekannter Weise beispielsweise dadurch herstellen, indem man die die weiteren Stoffe, die in der flüssigen Formulierung enthalten sein sollen, gemeinsam zerkleinert und dann die mikroverkapselten lodpropargylverbindungen zugibt oder die mikroverkapselten lodpropargylverbindungen und die weiteren Stoffe, die in der flüssigen Formulierung enthalten sein sollen, mittels eines Dissolvers oder Rührers innig miteinander vermischt.

Die flüssigen Formulierungen enthalten im Allgemeinen von 2 bis 95 Gew.-%, vorzugsweise von 5 bis 75 Gew.-% und ganz besonders bevorzugt von 5 bis 50 Gew.-% der erfindungsgemäßen Mikrokapseln.

Die Erfindung betrifft weiterhin die Verwendung der erfindungsgemäßen Mikrokapseln oder der bioziden Mittel zum Schutz von technischen Materialien, sowie technische Materialien enthaltend die bioziden Mittel oder erfindungsgemäßen Mikrokapseln.

Technische Materialien sind beispielsweise Baumaterialien, Holz, Holzwerkstoffe, Holz-Plastik-Verbundstoffe, Dichtungsmassen, Fugendichtungen, Kunststoffe, Folien, Steinplatten, Textilien wie zum Beispiel Planen und Zelte, Textilverbundstoffe, Beschichtungsmassen wie zum Beispiel Farben, Wandfarben, Holzschutzfarben, Fassadenfarben, Außenfarben, Innenfarben, Dispersionsfarben, Silicatfarben, Lacke, Beton, Zement, Mörtel oder Putze, vorzugsweise silicatgebundene, mineralische, harzgebundene oder siliconharzgebundene Putze, Kunstharzputzen, Holzbeschichtungen, Holzlasuren, Betonbeschichtungen, Dachsteinbeschichtungen, Dichtungsmassen oder Textilbeschichtungen.

Weitere Anwendungen für erfindungsgemäße Beschichtungsmassen finden sich neben der Bauindustrie auch in Medizintechnik, Textilindustrie, Gummiindustrie, Dichtungsindustrie, Agrarindustrie und Labortechnik.

Der Vorteil der Erfindung ist darin zu sehen, dass die Mikrokapseln ein überlegenes, weil vermindertes Leachingverhalten zeigen. Es lassen sich so erfindungsgemäß sowohl geringere Stoffmengen zum Schutz von Beschichtungsmassen einsetzen, als auch erheblich längere Wirkdauern erzielen.

Die folgenden Beispiele erläutern die vorliegenden Erfindung.

### Beispiele

In den Beispielen 1 bis 4 wird die Herstellung von IPBC Mikrokapseln beschrieben.

Hierbei wurden folgende Materialien eingesetzt:

### Bezeichnung

- Gummi Arabicum-Lösung (4 Gew.-%)
- Coadis™ BR3 (50 Gew.-% in H₂O) (Dispersionsreagenz; wässrige Polyacrylatsalz-Lösung der Firma Coatex)
- SILFOAM®SRE (Silikon-Antischaumemulsion Entschäumer der Firma Wacker)
- Preventol MP 100 (IPBC)
- Maprenal®-Wasser-Lösung (1:1) (Maprenal® MF 921w/85WA Melamin-Formaldehyd Polymer der Firma INEOS Melamines)
- Soprophor® S25 (Emulgator auf Basis von Tris-sterylphenyletherethoxylaten)
- Preventol® BM 25 (Gebindekonservierungsmittel enthaltend 2,4 Gew.-% Benzisothiazolinon und 4,9 Gew.-% Methylisothiazolinon)
- Rhodopol-G® (Verdicker auf Basis von Xanthan Gum der Firma Solvay Rhodia)
- Harnstoff

Die Bestimmung der Größe der Mikrokapseln wurde mittels Laserbeugung bestimmt. Es wurden entweder die festen Kapseln zugegeben oder daraus hergestellte Suspensionen/Formulierungen. Es wurden folgende Geräte und Einstellungen verwendet:

| | |
|---|---|
| Gerät: | LS 13 320 Particle Size Analyzer der Firma Beckmann Coulter mit PIDS-Technologie (Polarization Intensity Differential Scattering-Technologie) |
| Sample Modul: | Universal Liquid Module (ULM) |
| Illuminating Source: | Diffraction: Solid State (780 nm); PIDS: Wolfram Lampe mit Bandpassfilter (450, 600 und 900 nm) |
| Messzeit: | 90 Sekunden, vor der Messung 15 s Ultraschall |
| Berechnung: | Fraunhofer-Modell |
| Ergebnis: | Durchmesser D50% und D90% der Volumenverteilung |

### Beispiel 1

### Herstellung von IPBC enthaltenden Mikrokapseln (Nachrührzeit 4 h bei 70 °C)

In einem 1L-Edelstahltopf wurden bei Raumtemperatur 3,76 g Coadis BR, 37,5 g 4 Gew.-%ige Gummi Arabicum-Lösung und 3,03 g Antischaummittel Wacker SRE in 637,22 g Wasser unter Rühren zu einer leicht trüben Lösung verarbeitet.

Dann wurde durch Zugabe von 8,85 g einer 50 Gew.-%igen Lösung von Citronensäure in Wasser der pH-Wert von pH = 7,70 auf pH = 2,96 abgesenkt.

Die so erhaltene Lösung wurde in einen 1000 ml-Planschlifftopf mit Impellerrührer und Ultraturrax überführt. Unter Rührung mit einem Impellerrührer wurden bei ca. 400-420 U/min 150,09 g IPBC zugegeben.

Danach wurde auf 70°C aufgeheizt, wobei ab 60°C und dem beginnenden Schmelzen des IPBC der Ultra-Turrax zugeschaltet (15600 U/min) und nach Erreichen von 70°C mind. 30 min. emulgiert wurde.

Anschließend wurden 150 g einer 50 Gew.-%igen Lösung von Marprenal MF 921w/85WA in Wasser binnen 3 h zudosiert. Der Ultra-Turrax lief zunächst weiter mit. Nachdem 10 % des Melamin-Formaldehyd Polymers zudosiert wurde, wurde der Ultra-Turrax abgestellt und der Reaktionsansatz nur noch mittels Impellerrührer bei unveränderter Rührgeschwindigkeit gerührt.

Nach vollständiger Zudosierung des Melamin-Formaldehyd Polymers wurde der Reaktionsansatz noch 4 h bei 70 °C nachgerührt, dann abgelassen und unter Membranpumpenvakuum abgesaugt. Der feuchte Nutschkuchen wurde dann mit 67 g, 27 g und 7 g heißem (80 °C) Wasser gewaschen.

Man erhielt 312.50 g des weißen, feuchten Produktes.

Produkt (TxTxt) ab Beginn der Aufbringung: 70°C x 70°C x 7h = 34,300 (°C)²h
Produkt (TxTxt) nach Beendigung der Aufbringung: 70°C x 70°C x 4h = 19,600 (°C)²h
Teilchengröße:
D50 [µm]: 29,9
D90 [µm]: 45,1

Zur Bestimmung des Wasser- und Wirkstoffgehaltes wurde eine kleine Probe am Rotavapor 2 h getrocknet und der IPBC Gehalt der getrockneten Kapselmasse mittels IPBC bestimmt.

Gehalt IPBC in der Trockenmasse: 69,5 Gew.-%
Teilchengröße:
D50 [µm]: 24,0
D90 [µm]: 37,6

Das feuchte Produkt (Eintrag 1a) sowie die getrockneten Kapseln (Eintrag 1b) wurden im Leachingtest auf ihre Wirkstofffreigabe in Wasser untersucht. Die Ergebnisse sind in unten stehender Tabelle 1 wiedergegeben.

### Beispiel 2

### Herstellung von IPBC enthaltenden Mikrokapseln (Nachrührzeit 4 h bei 85 °C)

Die Herstellung der Mikrokapseln erfolgte analog zu Beispiel 1 mit dem Unterschied, dass nach vollständiger Zudosierung des Melamin-Formaldehyd Polymers der Reaktionsansatz noch 4 h bei 85 °C nachgerührt wurde.

Man erhielt 312.50 g des weißen, feuchten Produktes.

Produkt (TxTxt) ab Beginn der Aufbringung: 70°C x 70°C x 3h + 85°C x 85°C x 4h = 43.600 (°C)²h
Produkt (TxTxt) nach Beendigung der Aufbringung: 85°C x 85°C x 4h = 28.900 (°C)²h
Teilchengröße:
D50 [µm]: 22,3
D90 [µm]: 37,7

119,76 g des feuchten Produktes wurden am Rotavapor getrocknet. Man erhielt 80,06 g getrocknete Kapseln als weißes Pulver mit einem IPBC Gehalt von 67,1 Gew.-%.

Teilchengröße:
D50 [µm]: 19,7
D90 [µm]: 34,6

Das feuchte Produkt (Eintrag 2a) sowie die getrockneten Kapseln (Eintrag 2b) wurden im Leachingtest auf ihre Wirkstofffreigabe in Wasser untersucht. Die Ergebnisse sind in unten stehender Tabelle 1 wiedergegeben.

### Herstellung einer Formulierung aus dem feuchten Produkt

151,35 g Wasser wurden mit 0,76 g komplett geschmolzenem Soprophor S/25 mit einem Propellerrührer bei ca.300 U/min. verrührt, dann wurden 84,22 g des feuchten Produktes zugegeben und mit 0,25 g 50 Gew.-% iger NaOH Lösung von pH 4,0 auf 8,1 eingestellt. Anschließend gab man 12,43 g Harnstoff zu, rührte 10 Minuten bis alles gelöst war und gab dann unter weiterem Rühren 0,38 g Rhodopol-G langsam zu und rührte 1 h bis die Formulierung homogen war. Die Formulierung wurde dann durch Zugabe von 0,95 g Preventol BM 25 konserviert.

Man erhielt 250 g einer weißen Formulierung mit einem IPBC-Gehalt von 16,0 Gew.-%.

Teilchengröße:
D50 [µm]: 21,8
D90 [µm]: 57,9

Die Formulierung wurde im Leachingtest auf ihre Wirkstofffreigabe in Wasser untersucht (Eintrag 2c). Die Ergebnisse sind in unten stehender Tabelle 1 wiedergegeben.

### Herstellung einer Formulierung aus den getrockneten Kapseln

178,0 g Wasser wurden mit 0,76 g komplett geschmolzenem Soprophor S/25 mit einem Propellerrührer bei ca.300U/min. verrührt, dann wurden 55,88 g der getrockneten Kapseln zugegeben und mit 0,23 g 50 Gew.-% iger NaOH Lösung auf pH = 8,3 eingestellt. Anschließend gab man 12,49 g Harnstoff zu, rührte 10 Minuten bis alles gelöst war und gab dann unter weiterem Rühren 0,40 g Rhodopol-G langsam zu und rührte 1 h bis die Formulierung homogen war. Die Formulierung wurde dann durch Zugabe von 0,95 g Preventol BM 25 konserviert.

Man erhielt 250 g einer weißen Formulierung mit einem IPBC-Gehalt von 13,6 Gew.-%.

Teilchengröße:
D50 [µm]: 20,4
D90 [µm]: 37,5

Die Formulierung wurde im Leachingtest auf ihre Wirkstofffreigabe in Wasser untersucht (Eintrag 2d). Die Ergebnisse sind in unten stehender Tabelle 1 wiedergegeben.

### Beispiel 3

### Herstellung von IPBC enthaltenden Mikrokapseln (Nachrührzeit 18 h bei 80 °C)

Die Herstellung der Mikrokapseln erfolgte analog zu Beispiel 1 mit dem Unterschied, dass nach vollständiger Zudosierung des Melamin-Formaldehyd Polymers der Reaktionsansatz noch 18 h bei 80 °C nachgerührt wurde.

Man erhielt 253,98 g des weißen, feuchten Produktes. Der Gehalt an IPBC betrugt 50,2 Gew.-%.

Produkt (TxTxt) ab Beginn der Aufbringung: 70°C x 70°C x 3h + 85°C x 85°C x 18h = 144.750 (°C)²h
Produkt (TxTxt) nach Beendigung der Aufbringung: 85°C x 85°C x 18h = 130.050 (°C)²h
Teilchengröße:
D50 [µm]: 19,2
D90 [µm]: 39,4

123,95 g des feuchten Produktes wurden am Rotavapor getrocknet. Man erhielt 91,92 g getrocknete Kapseln als weißes Pulver mit einem IPBC Gehalt von 67,7 Gew.-%.

Teilchengröße:
D50 [µm]: 19,3
D90 [µm]: 33,7

Das feuchte Produkt (Eintrag 3a) sowie die getrockneten Kapseln (Eintrag 3b) wurden im Leachingtest auf ihre Wirkstofffreigabe in Wasser untersucht. Die Ergebnisse sind in unten stehender Tabelle 1 wiedergegeben.

### Herstellung einer Formulierung aus dem feuchten Produkt

160 g Wasser wurden mit 0,76 g komplett geschmolzenem Soprophor S/25 mit einem Propellerrührer bei ca.300 U/min. verrührt, dann wurden 75,11 g des feuchten Produktes zugegeben und mit 0,24 g 50 Gew.-% iger NaOH Lösung von pH 4,0 auf 8,8 eingestellt. Anschließend gab man 12,52 g Harnstoff zu, rührte 10 Minuten bis alles gelöst war und gab dann unter weiterem Rühren 0,38 g Rhodopol-G langsam zu und rührte 1 h bis die Formulierung homogen war. Die Formulierung wurde dann durch Zugabe von 0,95 g Preventol BM 25 konserviert.

Man erhielt 250,3 g einer weißen Formulierung mit einem IPBC-Gehalt von 14,7 Gew.-%.

Teilchengröße:
D50 [µm]: 21,4
D90 [µm]: 81,2

Die Formulierung wurde im Leachingtest auf ihre Wirkstofffreigabe in Wasser untersucht (Eintrag 3c). Die Ergebnisse sind in unten stehender Tabelle 1 wiedergegeben.

### Herstellung einer Formulierung aus den getrockneten Kapseln

178,5 g Wasser wurden mit 0,80 g komplett geschmolzenem Soprophor S/25 mit einem Propellerrührer bei ca.300 U/min. verrührt, dann wurden 55,53 g der getrockneten Kapseln zugegeben und mit 0,95 g 1 M NaOH Lösung auf pH = 8,3 eingestellt. Anschließend gab man 12,49 g Harnstoff zu, rührte 10 Minuten bis alles gelöst ist und gab dann unter weiterem Rühren 0,38 g Rhodopol-G langsam zu und rührte 1 h bis die Formulierung homogen war. Die Formulierung wurde dann durch Zugabe von 0,95 g Preventol BM 25 konserviert.

Man erhielt 250,2 g einer weißen Formulierung mit einem Gehalt an IPBC von 15,8 Gew.-%.

Teilchengröße:
D50 [µm]: 20,4
D90 [µm]: 36,1

Die Formulierung wurde im Leachingtest auf ihre Wirkstofffreigabe in Wasser untersucht (Eintrag 3d). Die Ergebnisse sind in unten stehender Tabelle 1 wiedergegeben.

### Beispiel 4

### Herstellung von IPBC enthaltenden Mikrokapseln (Nachrührzeit 22,5 h bei 80 °C, mit Natriumsulfat)

Die Herstellung der Mikrokapseln erfolgte analog zu Beispiel 1 mit dem Unterschied, dass nach vollständiger Zudosierung des Melamin-Formaldehyd Polymers der Reaktionsansatz noch 20 h bei 80 °C und nach Zugabe von 99,1 g Natriumsulfat weitere 2,5 h bei 80 °C nachgerührt wurde.

Produkt (TxTxt) ab Beginn der Aufbringung: 70°C x 70°C x 3h + 85°C x 85°C x 22,5h = 177.262,5 (°C)²h
Produkt (TxTxt) nach Beendigung der Aufbringung: 85°C x 85°C x 22,5h = 162.562,5 (°C)²h

Zur Herstellung eines feuchten Produktes und einer Formulierung wurde der noch heiße Ansatz geteilt.

### Herstellung des feuchten Produktes

519,07 g des Ansatzes wurden abgelassen und unter Membranpumpenvakuum abgesaugt. Der feuchte Nutschkuchen wurd dann mit 52 g, 52 g und 26 g heißem (80 °C) Wasser gewaschen. Man saugte dann noch 15 Minuten trocken.

Man erhielt 152,12 g feuchtes Produkt.

Teilchengröße:
D50 [µm]: 22,2
D90 [µm]: 78,9

Zur Bestimmung des Wasser- und Wirkstoffgehaltes wurde eine kleine Probe am Rotavapor 2 h bei 80 °C und 80 mbar getrocknet und der IPBC Gehalt der getrockneten Kapselmasse mittels IPBC bestimmt.

Gehalt IPBC in der Trockenmasse: 68,4 Gew.-%
Teilchengröße:
D50 [µm]: 21,1
D90 [µm]: 61,9

Das feuchte Produkt (Eintrag 4a) sowie die getrockneten Kapseln (Eintrag 4b) wurden im Leachingtest auf ihre Wirkstofffreigabe in Wasser untersucht. Die Ergebnisse sind in unten stehender Tabelle 1 wiedergegeben.

### Herstellung einer Formulierung aus der Reaktionssuspension

435,80 g der verblieben Suspension wurden unter Rühren mit einer 5,51 g einer 33 Gew.-%igen Lösung von Soprohor S 25 in Wasser versetzt. Anschließend wurde mit 1,38 g einer 40 Gew.-%igen NaOH Lösung der pH-Wert von 4,03 auf 8,40 eingestellt. Unter weiterem Rühren gab man dann 21,79 g Harnstoff und 2,46 g Rhodopol G zu und rührte weitere 2 h bis der Ansatz homogen war. Man erhielt 466,95 g einer weißen Suspension mit einem Gehalt an IPBC von 12,1 Gew.-% (HPLC).

Teilchengröße:
D50 [µm]: 20,3
D90 [µm]: 34,3

Die Formulierung wurde im Leachingtest auf ihre Wirkstofffreigabe in Wasser untersucht (Eintrag 4c). Die Ergebnisse sind in unten stehender Tabelle 1 wiedergegeben.

### Herstellung einer Formulierung aus dem feuchten Nutschkuchen

300,0 g Wasser werden mit 1,43 g komplett geschmolzenem Soprophor S/25 mit einem Propellerrührer bei ca.300 U/min. verrührt, dann werden 143,36 g des feuchten Nutschkuchens aus Beispiel 1a zugegeben und mit 0,7 g 50 % iger NaOH Lösung von 4,2 auf 7,2 eingestellt. Anschließend gibt man 23,75 g Harnstoff zu, rührt 10 Minuten bis alles gelöst ist und gibt dann unter weiterem Rühren 0,71 g Rhodopol-G langsam zu und rührt 2 h bis die Formulierung homogen ist. Die Formulierung wird dann durch Zugabe von 0,95 g Preventol BM 25 (Konservierungsmittel aus 2,4 % Benzisothiazolinon und 4,9 % Methylisothiazolinon) konserviert.

Man erhält 478,72 g einer weißen Formulierung mit einem Gehalt an IPBC von 14,6 %.

Teilchengröße:
D50 [µm]: 19,4
D90 [µm]: 31,6

Die Formulierung wurde im Leachingtest auf ihre Wirkstofffreigabe in Wasser untersucht (Eintrag 4d). Die Ergebnisse sind in unten stehender Tabelle wiedergegeben.

### Beispiel 5 (Vergleichsversuch analog zu Herstellbeispiel 3 aus WO 2004000953)

In einem 1 L Edelstahltopf wurden 0,99 g Gummi Arabicum, 4,99 g Antischaummittel Wacker SRE und 272,50 g Preventol MP 400 (40 %ige Suspension von IPBC in Wasser) in 394,9 g Wasser gerührt. Anschließend wurde der pH-Wert durch Zugabe von 99 g 12 Gew.-%iger Citronensäure von 3,91 auf 2,09 eingestellt.. Die Dispersion wurde auf 60 °C erwärmt und unter Rühren 217 g einer 50 Gew.-%igen Lösung Marprenal MF 921w/85WA in Wasser binnen 1h zudosiert. Anschließend wurde 2 h bei 60 °C nachgerührt.

144 g der Kapseldispersion wurden abfiltriert und mit 25 g und 20 g kaltem Wasser gewaschen. Man erhielt 40,15 g feuchten Nutschkuchen mit einem IPBC Gehalt von 34,7 Gew.-%.

4,67 g des feuchten Nutschkuchens wurden am Rotavapor getrocknet. Man erhielt 2,90 g eines weißen Pulvers mit einem IPBC Gehalt von 55,9 Gew.-%.

Produkt (TxTxt) ab Beginn der Aufbringung: 60°C x 60°C x 3h = 10,800 (°C)²h
Produkt (TxTxt) nach Beendigung der Aufbringung: 60°C x 60°C x 2h = 7,200 (°C)²h

Beide Proben wurden auf ihr Leachingverhalten hin untersucht (s. Tabelle 1).

### Durchführung Leaching-Test für IPBC enthaltende Mikrokapseln

In einem 100 ml Schraubdeckelglas wurde eine Menge der Formulierung eingewogen, die 280 ppm IPBC (bezogen auf 100 g) enthält, und mit Wasser auf 100 g aufgefüllt. Das Schraubdeckelglas wurde verschlossen und die Probe wurde auf einem Kreisschüttler bei 250 Umdrehungen pro Minute und 20°C geschüttelt. Nach 24 Stunden (24h-Leaching-Test) und 72 Stunden (72h-Leaching-Test) wurde 1 ml Probe mit einer Pipette entnommen und in ein Reaktionsgefäß überführt. Die Probe wurde 6 Minuten bei 14.000 Umdrehungen pro Minute zentrifugiert und der Überstand mittels High-Performance-Liquid-Chromatography analysiert.

Die Löslichkeit von IPBC in reinem Wasser beträgt 135 ppm, durch Mikrokapsel- oder Formulierungsbestandteile kann sie jedoch im Testmedium auch höher liegen.

**Tabelle 1**

| Eintrag / Beispiel | 24 h | 72 h |
|---|---|---|
| 1a | 16,6 ppm | 46,1 ppm |
| 1b | 26,5 ppm | 57,1 ppm |
| 2a | 19,3 ppm | 28,7 ppm |
| 2b | 19,9 ppm | 26,4 ppm |
| 2c | 23,6 ppm | 35,6 ppm |
| 2d | 23,5 ppm | 24,5 ppm |
| 3a | 14,2 ppm | 15,2 ppm |
| 3b | 17,5 ppm | 18,9 ppm |
| 3c | 18,0 ppm | 20,2 ppm |
| 3d | 23,8 ppm | 34,2 ppm |
| 4a | 10,8 ppm | 11,3 ppm |
| 4b | 13,2 ppm | 15,2 ppm |
| 4c | 12,4 ppm | 14,3 ppm |
| 4d | 9,9 ppm | 11,4 ppm |
| 5a | 131,1 | 180,3 |
| 5b | 108,5 | 162,0 |

## Patentansprüche

1. Verfahren zur Herstellung von Mikrokapseln, enthaltend zumindest eine lodpropargylverbindung, wobei die zumindest eine lodpropargylverbindung mit einem Mikroverkaspelungsmaterial mikroverkapselt ist, das zumindest ein Melamin-Formaldehyd Polymer enthält, umfassend zumindest:
a) Aufbringen von Mikroverkapselungsmaterial enthaltend zumindest ein Melamin-Formaldehyd Polymer auf zumindest eine Iodpropargylverbindung
b) Behandlung bei einer Temperatur T von 50 bis 95°C, bevorzugt 64 bis 95°C, vorzugsweise 68 bis 95°, besonders bevorzugt 70 bis 95°C und ganz besonders bevorzugt 70 bis 90°C über einen Zeitraum t, so dass das Produkt T x T x t > 18.000, vorzugsweise > 20.000 und besonders bevorzugt > 25.000 (°C)²h beträgt.

2. Verfahren nach Anspruch 1, **dadurch gekennzeichnet, dass** die Aufbringung in a) so durchgeführt wird, dass eine wässrige Emulsion oder Suspension der zumindest einen lodpropargylverbindung mit zumindest einem Melamin-Formaldehyd Polymer in Kontakt gebracht wird und die Aufbringung des zumindest einen Melamin-Formaldehyd Polymers auf die zumindest eine lodpropargylverbindung durch Verminderung der Löslichkeit des zumindest einen Melamin-Formaldehyd Polymers herbeigeführt wird.

3. Verfahren nach Anspruch 2, **dadurch gekennzeichnet, dass** die Verminderung der Löslichkeit entweder über die Erhöhung des Elektrolytgehaltes oder durch Einstellung des pH-Wertes erfolgt.

4. Verfahren nach einem der Ansprüche 1 bis 3, **dadurch gekennzeichnet, dass** sich das Produkt T x T x t auf den Zeitraum und die Temperatur nach Beendigung der Aufbringung des Mikroverkapselungsmaterials bezieht.

## Claims

1. Process for producing microcapsules comprising at least one iodopropargyl compound, where the at least one iodopropargyl compound is microencapsulated with a microencapsulation material which comprises at least one melamine-formaldehyde polymer, comprising at least:
a) application of microencapsulation material comprising at least one melamine-formaldehyde polymer to at least one iodopropargyl compound
b) treatment at a temperature T of from 50 to 95°C, preferably 64 to 95°C, preferably 68 to 95°C, particularly preferably 70 to 95°C and very particularly preferably 70 to 90°C, over a period t, such that the product T x T x t is > 18 000, preferably > 20 000 and particularly preferably > 25 000 (°C)²h.

2. Process according to Claim 1, **characterized in that** the application in a) is carried out in such a way that an aqueous emulsion or suspension of the at least one iodopropargyl compound is brought into contact with at least one melamine-formaldehyde polymer, and the application of the at least one melamine-formaldehyde polymer to the at least one iodopropargyl compound is brought about by reducing the solubility of the least one melamine-formaldehyde polymer.

3. Process according to Claim 2, **characterized in that** the reduction in solubility takes place either by increasing the electrolyte content or by adjusting the pH.

4. Process according to one of Claims 1 to 3, **characterized in that** the product T x T x t refers to the period and the temperature after the application of the microencapsulation material has ended.

## Revendications

1. Procédé de fabrication de microcapsules, contenant au moins un composé d'iodopropargyle, ledit au moins un composé d'iodopropargyle étant microencapsulé avec un matériau de microencapsulation qui contient au moins un polymère de mélamine-formaldéhyde, comprenant au moins :
a) l'application d'un matériau de microencapsulation contenant au moins un polymère de mélamine-formaldéhyde sur au moins un composé d'iodopropargyle,
b) le traitement à une température T de 50 à 95 °C, de préférence de 64 à 95 °C, avantageusement de 68 à 95 °C, de manière particulièrement préférée de 70 à 95 °C et de manière tout particulièrement préférée de 70 à 90 °C pendant un temps t, de sorte que le T x T x t du produit soit > 18 000, de préférence > 20 000 et de manière particulièrement préférée > 25 000 (°C)²h.

2. Procédé selon la revendication 1, **caractérisé en ce que** l'application en a) est réalisée par mise en contact d'une émulsion ou suspension aqueuse dudit au moins un composé d'iodopropargyle avec au moins un polymère de mélamine-formaldéhyde, et l'application dudit au moins un polymère de mélamine-formaldéhyde sur ledit au moins un composé d'iodopropargyle est provoquée par réduction de la solubilité dudit au moins un polymère de mélamine-formaldéhyde.

3. Procédé selon la revendication 2, **caractérisé en ce que** la réduction de solubilité a lieu par élévation de la teneur en électrolyte ou par ajustement du pH.

4. Procédé selon l'une quelconque des revendications 1 à 3, **caractérisé en ce que** le T x T x t du produit se rapporte au temps et la température après la fin de l'application du matériau de microencapsulation.
